# EUROPEAN PATENT APPLICATION

(11) **EP 2 763 122 A1**
(43) Date of publication of application: **06.08.2014**
(21) Application number: 11873339.3
(22) Date of filing: 26.09.2011
(51) Int. Cl.: G08G 1/16, B60R 21/00, B60W 30/08

(54) **VEHICLE DRIVING ASSISTANCE SYSTEM**

(71) Applicant: Toyota Jidosha Kabushiki Kaisha, Toyota-shi, Aichi 471-8571 (JP)
(72) Inventor: IGARASHI, Shinji, Toyota-shi Aichi 471-8571 (JP); MATSUBARA, Toshiyuki, Toyota-shi Aichi 471-8571 (JP); AKIYAMA, Tomonori, Toyota-shi Aichi 471-8571 (JP)
(74) Representative: Intès, Didier Gérard André
(86) International application number: PCT/JP2011/071872
(87) International publication number: WO 2013/046293

(57) **Abstract**

An object of the invention is to provide a technology that can provide driving assistance matching the sense of the driver in a system for assisting avoidance of a collision of a vehicle. To achieve the object, a system for assisting avoidance of a collision of a vehicle according to the invention predicts a range of paths extending from a start point at the position at which the self-vehicle will arrive after free running for a predetermined period of time from the present time along which the self-vehicle can travel by possible driving operations that the driver can normally perform. The system does not perform driving assistance if a path along which a solid object can be avoided exists in the predicted range of paths, and performs driving assistance if a path along which a solid object can be avoided does not exist in the predicted range of paths.

## Description

### [TECHNICAL FIELD]

The present invention relates to technologies of providing driving assistance for avoiding a solid object existing in the travel path of the self-vehicle.

### [BACKGROUND ART]

There has been developed heretofore driving assistance systems that detect a solid object existing in front of the self-vehicle and, if a collision of the self-vehicle with the detected solid object is predicted to occur, warns the driver or automatically performs driving operations for avoiding a collision of the self-vehicle with the solid object.

In a known technology of automated driving operations for avoiding a collision of the self-vehicle with a solid object, for example, turning of the vehicle is automatically performed when it is determined that it is not possible to avoid a collision of the self-vehicle with the solid object by braking (see, for example, Patent Document 1).

### [Prior Art Document]

### [PATENT DOCUMENT]

Patent Document 1: Japanese Patent Application Laid-Open No. 2001-247023

### [SUMMARY OF THE INVENTION]

### [PROBLEMS TO BE SOLVED BY THE INVENTION]

It takes some time (reaction delay) for a driver to start a driving operation after he or she is warned, and it also takes some time (response delay) for the vehicle to move in response to a manual or automatic driving operation. For this reason, there is a possibility that an automatic operation is started before the warned driver starts a driving operation or that a collision of the self-vehicle with a solid object cannot be avoided.

The present invention has been made in view of the above-described circumstances, and an object thereof is to provide a technology pertaining to a driving assistance system for a vehicle that can provide effective driving assistance when a reaction delay of the driver or a system response delay occurs.

### [MEANS FOR SOLVING THE PROBLEMS]

To achieve the above object, the present invention provides a system for assisting avoidance of a collision of a vehicle, which obtains an arrival point defined as a position at which the self-vehicle will arrive after free running for a predetermined period of time, obtains a range of paths starting from the arrival point along which the self-vehicle can travel by possible driving operations that the driver can normally perform, and performs driving assistance on condition that there is no path along which a solid object can be avoided in that range.

Specifically, a driving assistance system for a vehicle according to the present invention comprises:
recognition means for recognizing a solid object existing in the surrounding of a self-vehicle;
obtaining means for obtaining the momentum of the self-vehicle at the present time; and
assistance means for obtaining, using the momentum obtained by said obtaining means as a parameter, an arrival point defined as a position at which the self-vehicle will arrive after free running for a predetermined period of time, obtaining a range of paths starting from said arrival point along which the self-vehicle can travel if changes in the momentum caused by possible driving operations that the driver can normally perform are added to the momentum obtained by said obtaining means, and performing driving assistance for avoiding a collision with the solid object recognized by said recognition means on condition that there is no avoidance line defined as a path along which a collision with said solid object can be avoided in said travel range.

According to the present invention, a range of paths along which the self-vehicle can travel in the future (travel range) is obtained on the basis of a change in the momentum of the self-vehicle that may increase/decrease by possible driving operations that the driver can normally perform. (This change will be hereinafter referred to as a "normal change".) The travel range thus obtained includes paths along which the self-vehicle will travel if the driver performs normal driving operations (or if the momentum of the self-vehicle is changed by normal driving operations performed by the driver) as well as a path along which the self-vehicle will travel if the present state of driving operation performed by the driver is maintained (or if the present momentum of the vehicle is maintained unchanged). The "normal driving operations" mentioned above include braking operations and turning operations (e.g. operations for changing the steering angle of the wheels).

If there is an avoidance line (or avoidance lines) in said travel range, the driver can avoid a collision of the self-vehicle with a solid object by performing normal driving operations. Therefore, if driving assistance is performed while the driver is intending to perform normal driving operations in the future, the driver may feel bothered.

In contrast, the driving assistance system according to the present invention does not perform driving assistance when there is an avoidance line (or avoidance lines) in the travel range, that is, when the driver can avoid a collision of the self-vehicle with a solid object by normal driving operations. In consequence, a situation in which driving assistance is performed in spite of the driver's intention of performing normal driving operations can be prevented from occurring.

In this connection, there is a possibility that the driver may not perform driving operations as usual, while driving assistance by the assistance means is not performed. For example, when the level of alertness of the driver is low, the driver may not perform normal driving operations. In the absence of normal driving operations performed by the driver, the number of available avoidance lines decreases as the vehicle comes closer to a solid object. Then, driving assistance is performed at the time when avoidance lines cease to exist in the travel range. In consequence, a collision of the self-vehicle with the solid object can be avoided, even in the case where the driver does not perform normal driving operations.

The aforementioned normal change may be obtained in advance by an adaptation process based on, for example, experiments or determined by learning based on previous driving operations performed by the driver. The normal change may be either a fixed value or a variable value increased/decreased in relation to the running speed of the self-vehicle. In the case where the normal change is varied in relation to the running speed, the normal change may be set to be larger when the speed of the vehicle is low than when it is high. This is because when the speed of the vehicle is low, the variety of driving operations that the driver can normally perform tends to be larger than when the speed of the vehicle is high, leading to a larger normal change accordingly.

The "momentum" of the self-vehicle in the context of the present invention may be, for example, the yaw rate of the self-vehicle, the acceleration in the front-rear direction of the vehicle (longitudinal acceleration), the acceleration in the left-right direction of the vehicle (lateral acceleration), the G-force acting in the front-rear direction of the vehicle (longitudinal G-force), the G-force acting in the left-right direction of the vehicle (lateral G-force), or the cornering force.

It is preferred that the parameter used as the "momentum" of the self-vehicle in the present invention be a parameter that makes the above-described travel range smaller when the running speed of the self-vehicle is high than when it is low. This is the case with the lateral acceleration and the lateral G-force. Using such a parameter as the momentum makes the travel range smaller when the speed of the vehicle is high than when it is low. In consequence, the timing at which avoidance lines cease to exist in the travel range (in other words, the timing of execution of driving assistance) is earlier when the speed of the vehicle is high than when it is low. Therefore, it is possible to avoid a collision of the self-vehicle with a solid object, even when the running speed of the vehicle is high.

In the driving assistance system for a vehicle according to the present invention, when there is no avoidance line in the aforementioned travel range, the assistance means may perform driving assistance either immediately or at the time when the length of the path having the largest length among the paths included in the travel range becomes equal to or shorter than a threshold.

If driving assistance is performed immediately when there is no avoidance line in the aforementioned travel range, a collision can be avoided more reliably. However, some drivers start driving operations at a relatively late time in some cases, and driving operation performed immediately when there is no avoidance line in the aforementioned travel range may bother such drivers. In contrast, if driving assistance is performed at the time when the length of the longest path becomes equal to or shorter than a threshold, driving assistance can be performed without bothering the above-described type of drivers. The threshold mentioned above is a value equal to the shortest length that allows avoidance of a collision of the self-vehicle with a solid object plus a margin.

The driving assistance in the context of the present invention is at least one of a process of warning the driver and a process of automatically performing a driving operation for avoiding a collision of the self-vehicle with a solid object. The method of warning the driver may be to provide one of warning sound, warning light, and a message through a speaker or display device. The driving operation automatically performed to avoid a collision of the self-vehicle with a solid object may be an operation for changing the steering angle of the wheels (steering) or a turning operation such as operation for differentiating braking forces acting on the left and right wheels.

In the case where driving assistance employing a turning operation and a braking operation together, the aforementioned threshold can be made smaller than in the case where driving assistance employing only one of a turning operation and a braking operation is performed, and therefore it is possible to avoid a collision of the self-vehicle with a solid object while delaying the timing of performing driving assistance as much as possible.

It takes some time for the vehicle to move responsive to diving assistance after the driving assistance is started. For example, in the case where warning to the driver is performed as driving assistance, there is a reaction delay for the driver to start a driving operation after he or she receives the warning. In the case where a braking operation and/or turning operation is automatically performed as driving assistance, there is a response delay for the vehicle to move responsive to the braking operation and/or turning operation after the operation(s) is (are) started. If there is a reaction delay or response delay as described above, it is considered that the self-vehicle will run with a momentum substantially equal to the momentum at the present time (free running). Therefore, if the travel range is obtained as a range extending from a start point at the position of the self-vehicle at the present time, there is a possibility that the timing of performing driving assistance may be unduly late or that the avoidance line along which a solid object can be actually avoided may differ from the predicted avoidance line.

The driving assistance system according to the present invention obtains the travel range as a range extending from a start point at the position at which the self-vehicle will arrive after free running for a predetermined period of time. Therefore, it is possible to prevent a situation in which the timing of performing driving assistance is unduly late from occurring and to make the difference between the avoidance line along which a solid object can be actually avoided and the predicted avoidance line small. In consequence, the driving assistance system according to the present invention can provide effective driving assistance even in cases where there is a reaction delay of the driver and/or a response delay of the system.

The "predetermined period of time" mentioned above is a period of time determined taking into consideration at least one of the reaction delay of the driver and the response delay of the system. For example, in the case where warning to the driver is performed as driving assistance, the predetermined period of time may be set to be equal to the sum of the time length of the reaction delay of the driver and the time length of the response delay of the system plus a margin. On the other hand, in the case where a braking operation and/or a turning operation is performed automatically as driving assistance, the predetermined period of time may be set to be equal to the time length of the response delay of the system plus a margin. The time length of the reaction delay of the driver may be determined in advance by a statistical method. The time length of the response delay of the system may be determined in advance by, for example, an adaptation process based on experiments.

The length of the aforementioned reaction delay of the driver may be set as either a fixed value determined based on the longest response delay period found statistically or a variable value varied in relation to the condition of the driver (e.g. whether the driver is operating a device such as an air conditioner or a navigation system or not, or whether the level of alertness of the driver is low or not). The length of the aforementioned response delay of the system may be set as either a fixed value determined based on a response delay of an actuator for changing the steering angle of the wheels, a response delay of an actuator for adjusting the brake oil pressures acting on the left and right wheels, or a delay in transfer of brake fluid or a variable value varied in relation to the communication load of the system.

When obtaining a position (or arrival point) at which the self-vehicle will arrive after free running for the predetermined period of time from the present time, the driving assistance system for a vehicle according to the present invention may obtains a plurality of arrival points on the assumption that the self-vehicle will shift to the left or right by a certain amount. In this case, a travel range may be obtained for each of the plurality of arrival points.

While running, a vehicle may sometimes wobble to the left or right due to play of the steering mechanism, cant of the road surface, slip angle of wheel, or other causes. If the number of arrival points obtained is only one, the actual travel path can deviate from the predicted travel range when such wobbling occurs. In the case where a plurality of arrival points are obtained on the assumption that the self-vehicle will shift to the left or right by a certain amount during free running and a travel range is obtained for each of the plurality of arrival points, the deviation of the actual travel path from the predicted travel range can be prevented with improved reliability. In the case where a travel range is obtained for each of the plurality of arrival points, driving assistance may be performed on condition that there is no avoidance line in any of the travel ranges.

### [ADVANTAGEOUS EFFECT OF THE INVENTION]

The driving assistance system for a vehicle according to the present invention can provide effective driving assistance even if there is a reaction delay of the driver or a response delay of the system.

### [Brief Description Of The Drawings]

Fig. 1 is a diagram showing the configuration of a driving assistance system for a vehicle according to the present invention.
Fig. 2 is a diagram illustrating a method of obtaining a travel range.
Fig. 3 is a diagram illustrating another method of obtaining a travel range.
Fig. 4 is a diagram showing a case in which there are avoidance lines in the travel range.
Fig. 5 is a diagram showing a case in which there is no avoidance line in the travel range.
Fig. 6 is a diagram showing a predicted avoidance line and an actual avoidance line in a case where there is a reaction delay of the driver.
Fig. 7 is a diagram showing a predicted avoidance line and an actual avoidance line in a case where there is a response delay of the system.
Fig. 8 is a diagram illustrating a method of obtaining a travel range on the basis of the time length of the reaction delay of the driver or the time length of the response delay of the system.
Fig. 9 is a flow chart of the process of executing driving assistance.
Fig. 10 is a diagram illustrating a method of determining arrival points in a second embodiment.

### [EMBODIMENTS FOR CARRYING OUT THE INVENTION]

In the following, specific embodiments of the present invention will be described with reference to the drawings. Here, an exemplary case in which the present invention is applied to a system that determines a travel path of a self-vehicle and/or an obstacle and performs driving assistance for preventing deviation from the determined travel path and/or avoiding a collision with the obstacle. The "driving assistance" mentioned here refers to a process executed at a timing that enables the self-vehicle to avoid a solid object, and the process is executed at a time earlier than the execution of a process for reducing collision damage, which is executed in the case where a collision of the vehicle with the obstacle is unavoidable. The constructions of the embodiments described in the following are illustrative modes of the present invention and not intended to limit the present invention.

### <FIRST Embodiment>

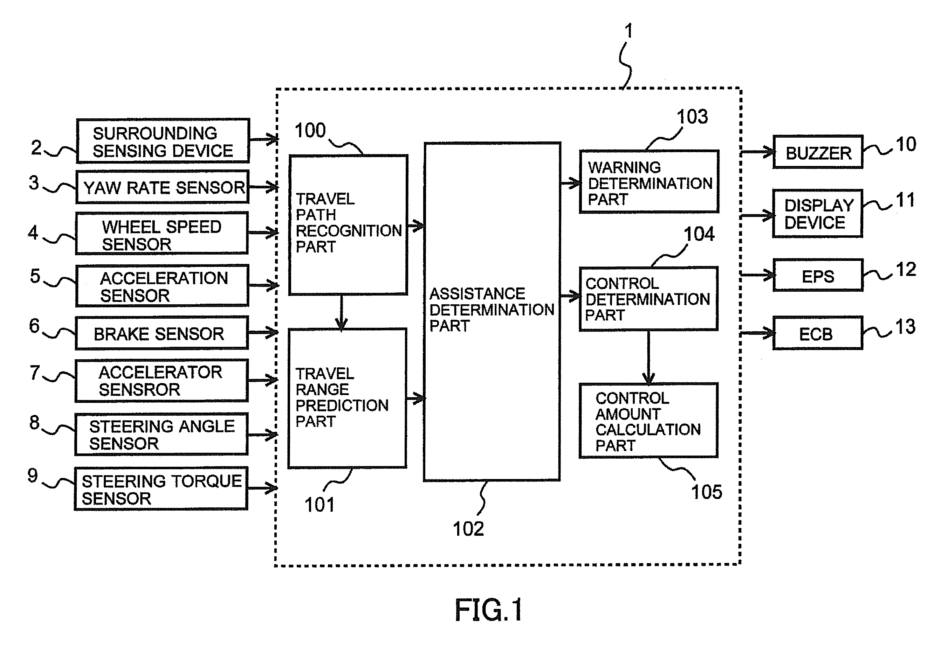

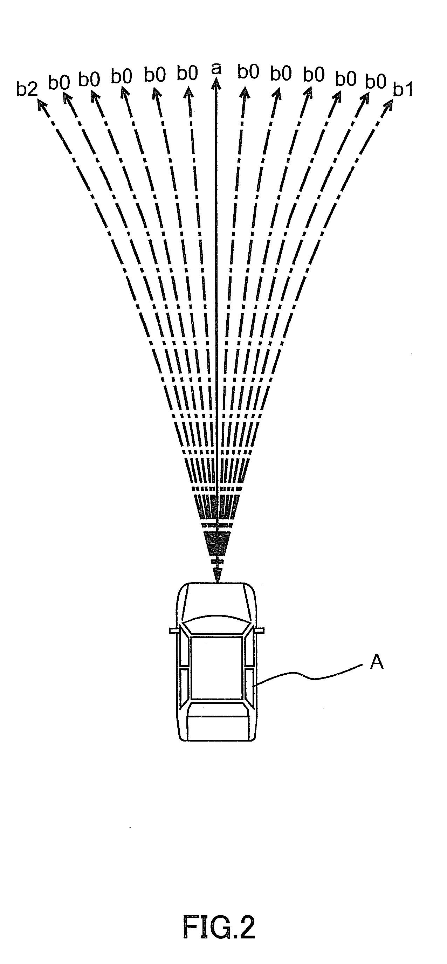

A first embodiment of the present invention will be described firstly with reference to Figs. 1 to 9. Fig. 1 is a block diagram showing, on a function-by-function basis, the configuration of a driving assistance system for a vehicle to which the present invention is applied. As shown in Fig. 1, the vehicle is equipped with a control unit (ECU) 1 for driving assistance.

The ECU 1 is an electronic control unit having a CPU, a ROM, a RAM, a backup RAM, and I/O interface etc. The ECU 1 is electrically connected with various sensors such as a surrounding sensing device 2, a yaw rate sensor 3, a wheel speed sensor 4, an acceleration sensor 5, a brake sensor 6, an accelerator sensor 7, a steering angle sensor 8, and a steering torque sensor 9. Signals output from these sensors are input to the ECU 1.

The surrounding sensing device 2 includes, for example, at least one measurement device selected from among an LIDAR (Laser Imaging Detection And Ranging), an LRF (Laser Range Finder), a millimeter wave radar, and a stereo camera. The surrounding sensing device 2 acquires, by detection, information about a relative position (e.g. relative distance and/or relative angle) of the self-vehicle and a solid object existing in the surrounding of the vehicle.

The yaw rate sensor 3 is mounted, for example, on the body of the self-vehicle and outputs an electrical signal correlating with the yaw rate of the self-vehicle. The wheel speed sensor 4 is attached to a wheel of the vehicle and outputs an electrical signal correlating with the running speed of the vehicle (vehicle speed). The acceleration sensor 5 outputs electrical signals correlating with the acceleration of the self-vehicle in the front-rear direction (longitudinal acceleration) and the acceleration of the self-vehicle in the left-right direction (lateral acceleration).

The brake sensor 6 is attached, for example, to a brake pedal provided in the cabin and outputs an electrical signal correlating with the operation torque of (or depression force acting on) the brake pedal. The accelerator sensor 7 is attached, for example, to an accelerator pedal provided in the cabin and outputs an electrical signal correlating with the operation torque of (or depression force acting on) the accelerator pedal. The steering angle sensor 8 is attached, for example, to a steering rod connected with a steering wheel provided in the cabin and outputs an electrical signal correlating with the rotational angle of the steering wheel (steering angle) relative to a neutral position. The steering torque sensor 9 is attached to the steering rod and outputs an electrical signal correlating with the toque (steering torque) exerted on the steering wheel.

The ECU 1 is also connected with various devices such as a buzzer 10, a display device 11, an electric power steering (EPS) 12, and an electronically controlled brake (ECB) 13. These devices are electrically controlled by the ECU 1.

The buzzer 10 is provided, for example, in the cabin to provide warning sound or the like. The display device 11 is provided, for example, in the cabin to display various messages and warning light. The electric power steering (EPS) 12 is a device that assists the steering torque of the steering wheel utilizing torque generated by an electric motor. The electronically controlled brake (ECB) 13 is a device that electrically adjusts the operation oil pressure (brake oil pressure) of friction brakes provided for the respective wheels.

To control the various devices using signals output from the above-described various sensors, the ECU 1 has the following functions. Specifically, the ECU 1 has a travel path recognition part 100, a travel range prediction part 101, an assistance determination part 102, a warning determination part 103, a control determination part 104, and a control amount calculation part 105.

The travel path recognition part 100 generates information about the road (travel path) on which the self-vehicle will travel, on the basis of information output from the surrounding sensing device 2. For example, the travel path recognition part 100 generates information about the positions of solid objects that can be obstacles to the self-vehicle and indexes indicating lane boundaries (e.g. road markings such as white or yellow lines indicating lane boundaries and solid objects such as curbstones, guard rails, grooves, walls, and poles existing along and on the side of the lane) in a coordinate system having an origin at the position of the self-vehicle and information about the posture of the self-vehicle relative to such solid objects and lane boundaries (e.g. the distances and yaw angle relative to them). The travel path recognition part 100 corresponds to the recognition means according to the present invention.

The travel range prediction part 101 determines a path along which the self-vehicle is predicted to travel in the coordinate system generated by the travel path recognition part 100. In this process, the travel range prediction part 101 predicts a range (travel range) of paths along which the self-vehicle can travel in the future by possible operations that the driver can normally perform.

Specifically, the travel range prediction part 101 calculates the present lateral acceleration Gy0 of the self-vehicle A form a signal output from the acceleration sensor 5 and determines a path a along which the self-vehicle A is predicted to travel if the self-vehicle A runs with the present lateral acceleration Gy0 being unchanged.

Then, the travel range prediction part 101 determines a path b1 along which the self-vehicle A is predicted to travel if a normal change ΔGy is added to the present lateral acceleration Gy0 of the self-vehicle A and determines a path b2 along which the self-vehicle A is predicted to travel if a normal change ΔGy is subtracted from the present lateral acceleration Gy0 of the self-vehicle A.

In this process, the travel range prediction part 101 may calculate the turning radius R of the self-vehicle from the value obtained by adding/subtracting the normal change ΔGy to/from the present lateral acceleration Gy0 and determine the path b1, b2 on the basis of the turning radius R thus calculated and the width of the self-vehicle. The turning radius R can be calculated by dividing the vehicle speed V by the yaw rate γ (R = V/γ), where the yaw rate γ can be calculated by dividing the lateral acceleration Gy by the vehicle speed V (γ = GyN). Then, the travel range prediction part 101 determines paths b0 associated with regular-step variations in the steering angle or the lateral acceleration in the range (travel range) from the aforementioned path b1 to path b2.

The aforementioned normal change ΔGy is an amount equal to the maximum change in the lateral acceleration caused by driving operations that the driver can normally perform. This amount is determined in advance by experiments. The normal change ΔGy may be corrected in relation to the vehicle speed. For example, the normal change ΔGy may be corrected to be larger when the vehicle speed is low than when it is high. This can lead to a decrease in the frequency of the occurrence of driving assistance performed against the driver's will while the self-vehicle are running at a low speed and can delay the timing of execution of driving assistance as much as possible. Moreover, this can prevent the timing of execution of driving assistance from becoming unduly late.

If the self-vehicle A is already in a turning state at the present time (|Gy0l > 0), the absolute value (|Gy0 ± ΔGy|) of the value obtained by adding/subtracting the normal change ΔGy to/from present lateral acceleration Gy0 can be larger than the maximum lateral acceleration (in the range of, for example, 0.2G to 0.3G) that can be generated by normal driving operations performed by the driver. In view of this, the value of the normal change ΔGy may be limited so that the absolute value (|Gy0 ± ΔGy|) of the value obtained by adding/subtracting the normal change ΔGy to/from present lateral acceleration Gy0 will not exceed the aforementioned maximum lateral acceleration.

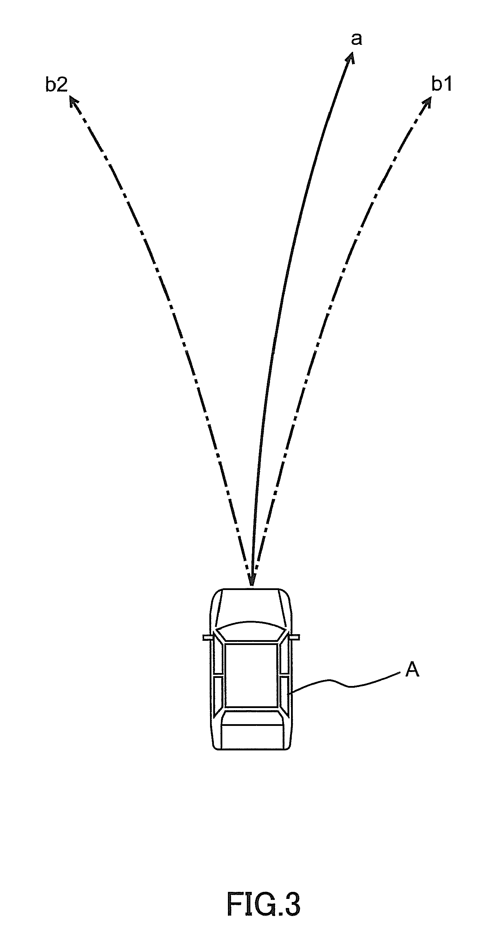

In determining the travel range, the travel range prediction part 101 may set paths along which the self-vehicle is predicted to travel if the vehicle runs at the aforementioned maximum lateral acceleration as path b1 and path b2. For example, as shown in Fig. 3, the travel range prediction part 101 may set a path along which the self-vehicle is predicted to travel if the vehicle runs while turning to the right at the maximum lateral acceleration as path b1 and set a path along which the self-vehicle is predicted to travel if the vehicle runs while turning to the left at the maximum lateral acceleration as path b2.

Then, the assistance determination part 102 determines whether or not driving assistance is to be performed, on the basis of the information generated by the travel path recognition part 100 and the travel range predicted by the travel range prediction part 101. Specifically, the assistance determination part 102 disables driving assistance, if there is

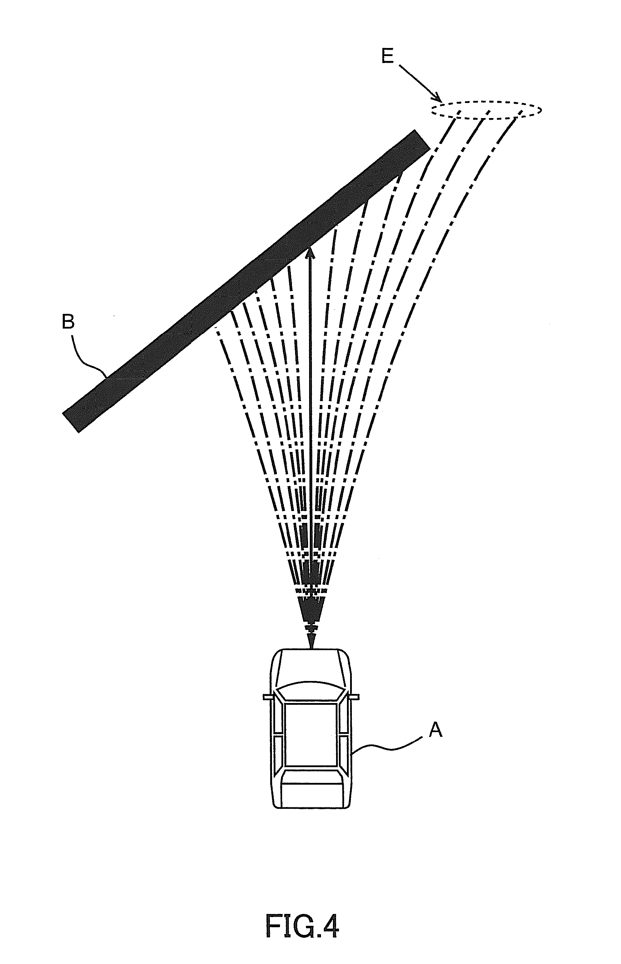

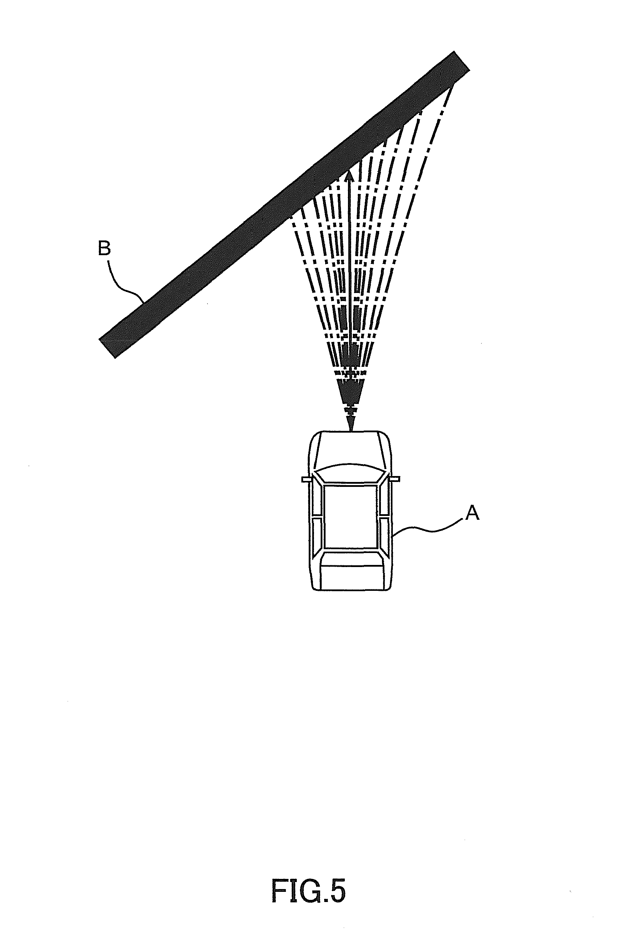

(are) a path(s) (avoidance line(s)) E along which a solid object B can be avoided in the aforementioned travel range as shown in Fig. 4. On the other hand, the assistance determination part 102 enables driving assistance, if there are no avoidance lines in the aforementioned travel range as shown in Fig. 5.

The warning determination part 103 warns the driver by buzzing of the buzzer 10 and/or display of a warning message or warning light on the display device 11, when driving assistance is enabled by the assistance determination part 102. For example, the warning determination part 103 may cause the buzzer 10 to buzz and/or cause the display device 11 to display the warning message or warning light immediately at the time when driving assistance is enabled by the assistance determination part 102 (at the time when avoidance lines cease to exist in the aforementioned travel range).

The warning determination part 103 may be configured to cause the buzzer 10 to buzz and/or to cause the display device 11 to display the warning message or warning light at the time when the distance between a solid object and the self-vehicle traveling along the path in which the distance between the self-vehicle and the solid object is largest among the paths included in the aforementioned travel range becomes equal to or smaller than a predetermined distance. Moreover, the warning determination part 103 may be configured to calculate the time taken for the self-vehicle A to travel along the path in which the distance between the self-vehicle and the solid object is largest to reach the solid object B, and to cause the buzzer 10 to buzz and/or to cause the display device 11 to display the warning message or warning light at the time when the result of the calculation becomes equal to or shorter than a predetermined time. If the timing of buzzing of the buzzer 10 and/or display of the warning message or warning light by the display device 11 is determined with respect to the path in which the distance between the self-vehicle and the solid object is largest as described above, the timing can be retarded as much as possible. Consequently, driving assistance can be performed without bothering the driver.

The predetermined distance and the predetermined time mentioned above may be varied responsive to the signals output from the yaw rate sensor 3 and the vehicle speed sensor 4. For example, the predetermined distance or the predetermined time may be set longer when the vehicle speed is high than when it is low. The predetermined distance or the predetermined time may be set longer when the yaw rate is high than when it is low.

The aforementioned predetermined distance may be set to be equal to the length of each of the paths included in the travel range, and the warning determination part 103 may be configured to cause the buzzer 10 to buzz and/or cause the display device 11 to display the warning message or warning light at the time when all the paths included in the travel range interfere with the solid object. The way of warning the driver is not limited to buzzing of the buzzer 10 or display of a warning message or warning light on the display device 11, but other methods such as intermittently changing the fastening torque of the sheet belt may be adopted.

When driving assistance is enabled by the assistance determination part 102, the control determination part 104 determines the timing for automatically performing a driving operation needed to avoid a collision of the self-vehicle with the solid object. (This operation will be hereinafter referred to as "avoidance operation".)

Specifically, the control determination part 104 may be configured to synchronize the time at which the avoidance operation is to be performed with the time when the distance between a solid object and the self-vehicle traveling along the path in which the distance between the self-vehicle and the solid object is largest among the paths included in the aforementioned travel range becomes equal to or smaller than a predetermined distance. The control determination part 104 may be configured to calculate the time taken for the self-vehicle to travel along the path in which the distance between the self-vehicle and the solid object is largest among the paths included in the aforementioned travel range to reach the solid object, and to synchronize the time at which the avoidance operation is to be performed with the time when the result of the calculation becomes equal to or shorter than a predetermined time. The aforementioned predetermined distance may be set to be equal to the length of each of the paths included in the travel range, and the control determination part 104 may be configured to synchronize the time at which the avoidance operation is to be performed with the time when all the paths included in the travel range interfere with the solid object.

If the timing for performing driving assistance is determined with respect to the path in which the distance between the self-vehicle and the solid object is largest as described above, the timing can be retarded as much as possible. Consequently, driving assistance can be performed without bothering the driver. The avoidance operation mentioned here includes an operation of changing the steering angle of wheels using the electric power steering (EPS) 12 and an operation of changing the braking force acting on wheels using the electronically controlled brake (EBC) 13.

The predetermined distance and the predetermined time referred to by the control determination part 104 may be varied in relation to the vehicle speed and the yaw rate, as with the predetermined distance and the predetermined time referred to by the warning determination part 103 described above. The predetermined distance and the predetermined time referred to by the control determination part 104 should be set to be equal to or shorter than the predetermined distance and the predetermined time referred to by the warning determination part 103 described above.

When the timing for performing the avoidance operation is determined by the control determination part 104, the control amount calculation part 105 calculates control amounts for the electric power steering (EPS) 12 and the electronically controlled brake (ECB) 13 and controls the electric power steering (EPS) 12 and the electronically controlled brake (ECB) 13 in accordance with the control amounts thus calculated and the timing for performing the avoidance operation determined by the control determination part 104.

Specifically, the control amount calculation part 105 determines an avoidance line along which a collision of the self-vehicle with the solid object can be avoided and calculates a target yaw rate needed to cause the self-vehicle to travel along the avoidance line thus determined. Then, the control amount calculation part 105 sets a control amount (steering torque) for the electric power steering (EPS) 12 and a control amount (brake oil pressure) for the electronically controlled brake (ECB) 13 so as to make the yaw rate of the self-vehicle (a signal output from the yaw rate sensor 3) equal to the target yaw rate. In connection with this, the relationship between the target yaw rate and the steering torque and the relationship between the target yaw rate and the brake oil pressure may be prepared in advance as maps.

The method of decelerating the vehicle is not limited to operating the friction brake by the electronically controlled brake (EBC) 13, but other methods such as converting the kinetic energy of the vehicle into electrical energy (regeneration) and increasing the engine brake by changing the change gear ratio of the change gear may be employed. The method of changing the yaw rate of the vehicle is not limited to changing the steering angle by the electric power steering (EPS) 12, but other methods such as applying different brake oil pressures to the right and left wheels of the vehicle may be employed.

The travel range prediction part 101, the assistance determination part 102, the warning determination part 103, the control determination part 104, and the control amount calculation part 105 described in the foregoing constitute the assistance means according to the present invention.

The ECU 1 configured as described above prevents driving assistance from being performed when there is an avoidance line (or avoidance lines) in the travel range predicted by the travel range prediction part 101, that is, when it is possible for the driver to avoid a collision of the self-vehicle with the solid object by performing normal driving operations. In consequence, a situation in which driving assistance is performed in spite of the driver's intention of performing normal driving operations can be prevented from occurring.

There is a possibility that the driver may not perform driving operations as usual, while driving assistance is not performed. For example, when the level of alertness of the driver is low (e.g. when the driver is looking aside or falling asleep), there is a possibility that the driver may not perform normal driving operations. While the driver does not perform normal driving operations, the number of available avoidance lines decreases as the self-vehicle comes closer to the solid object. Then, driving assistance such as warning and/or avoiding operation is performed at the time when avoidance lines cease to exist in the travel range. In other words, even in the case where the driver does not perform normal driving operations, driving assistance is performed at the time when avoidance lines cease to exist in the travel range.

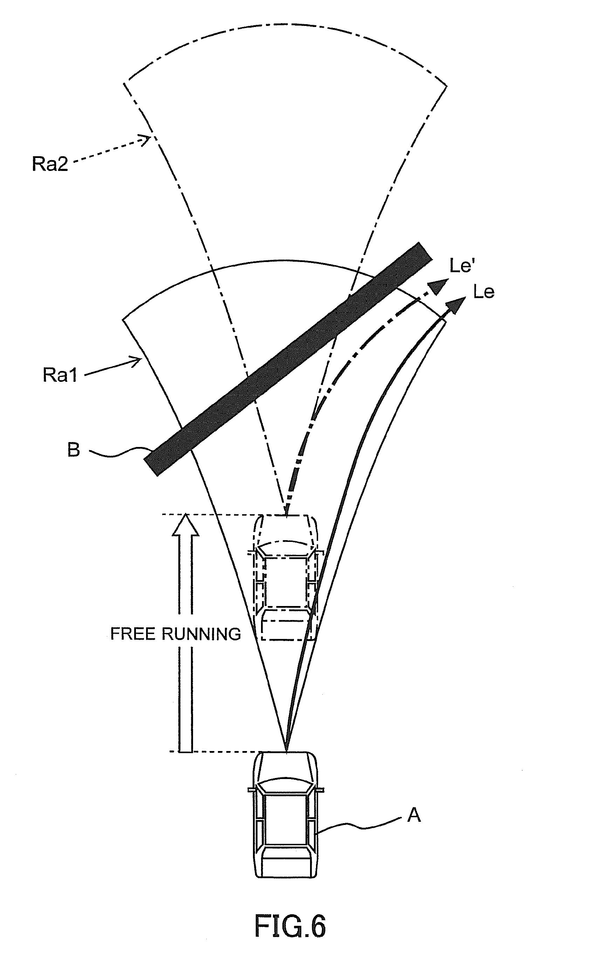

There is a reaction delay from the time at which the driver is warned to the time at which the driver starts a driving operation. For example, in the case shown in Fig. 6 in which a travel range (the travel range Ra1 indicated by solid lines in Fig. 6) extending from a start point at the position of the self-vehicle A at the present time is determined by prediction, an avoidance line Le along which the self-vehicle A can avoid the solid object B is included in the travel range. Therefore, the above-described driving assistance is not performed in this case.

However, if warning is issued to the driver at the present time, it takes some time (reaction delay) for the driver thus warned to start a driving operation for avoiding the solid object B. It is considered that during the reaction delay period, the self-vehicle A will continue free running with a momentum substantially equal to the momentum at the present time. Therefore, the momentum of the self-vehicle A will start to change after the free running. At that time, the avoidance line (or avoidance lines) Le' may deviate from the range (travel range Ra2 in Fig. 6) within which the self-vehicle A can travel by normal operations performed by the driver.

Therefore, if the travel range is determined by prediction as a range extending from a start point at the position of the self-vehicle at the present time, there is a possibility that the timing of warning may be unduly late or that the avoidance line (or avoidance lines) along which the solid object can be actually avoided may differ from the predicted avoidance line.

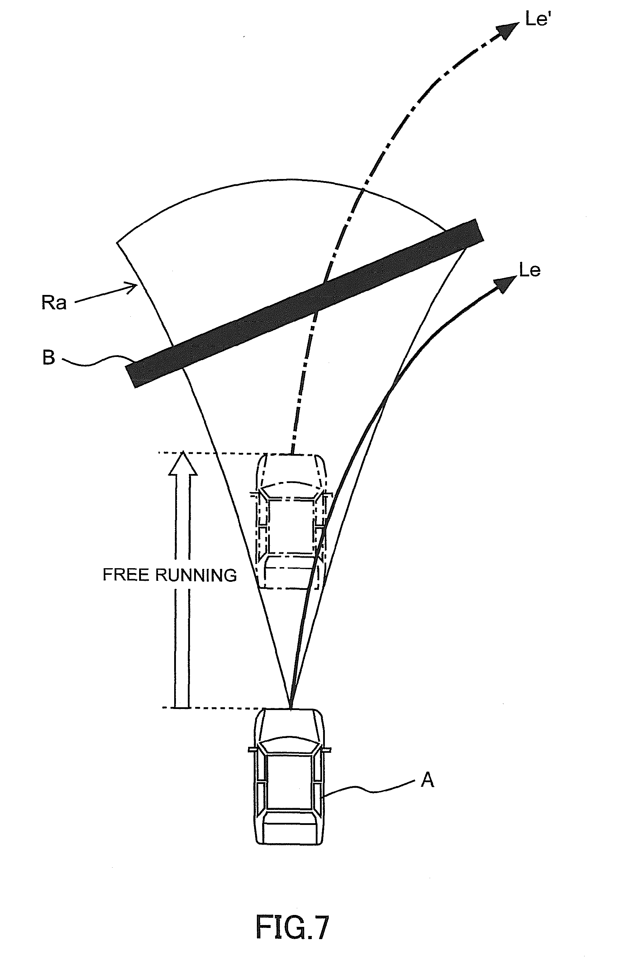

There also is a response delay from the time at which the control amount calculation section 105 starts an avoidance operation to the time at which the yaw rate starts to change actually. For example, in the case shown in Fig. 7 in which there is no avoidance line in the travel range Ra predicted as a range extending from a start point at the position of the self-vehicle at the present time, the control amount calculation part 105 determines an avoidance line Le along which the solid object B can be avoided and controls the electric power steering (EPS) 12 and the electronically controlled brake (ECB) 13 on the basis of the travel path L thus determined.

However, it takes some time (response delay) since the control amount calculation part 105 starts to control the electric power steering (EPS) 12 and the electronically controlled brake (ECB) 13 until the steering angle of the wheels and the brake oil pressure start to change. It is considered that during the response delay period, the self-vehicle A will continue free running with a momentum substantially equal to the momentum at the present time. Consequently, the momentum of the self-vehicle A will start to change after the free running. This means that the self-vehicle A will travel along a path Le' having a shape same as the aforementioned avoidance line Le, after the free running.

Therefore, if the travel range is determined by prediction as a range extending from a start point at the position of the self-vehicle at the present time, there is a possibility that the timing of performing an avoidance operation may be unduly late or that the avoidance line along which the solid object can be actually avoided may differ from the avoidance line determined by the control amount calculation part 105.

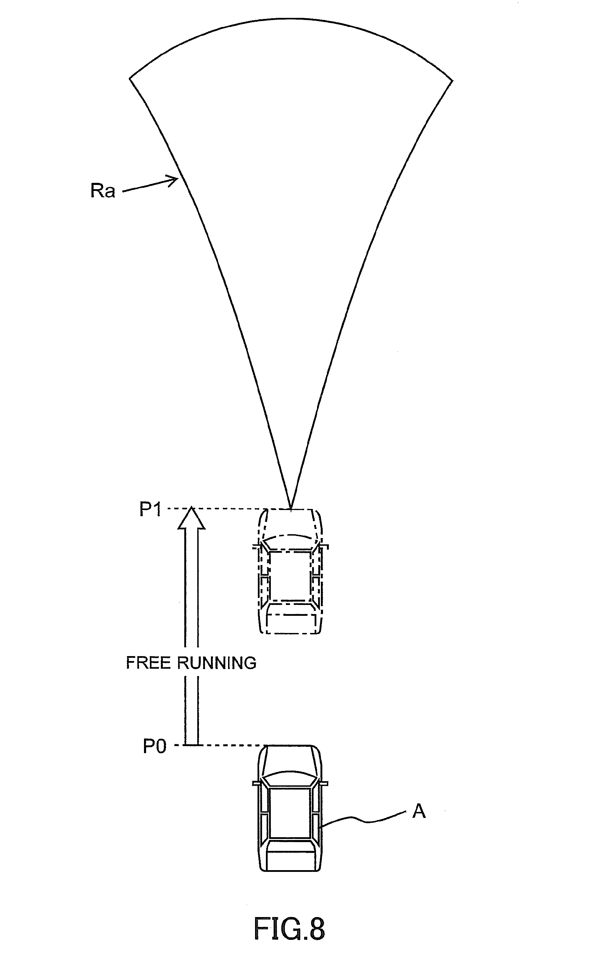

In view of this, in the driving assistance system for a vehicle according to this embodiment as shown in Fig. 8, the travel range prediction part 101 predicts a travel range Ra extending from a start point at the position P1 at which the self-vehicle A will arrive after free running for a predetermined period of time from the position P0 of the self-vehicle A at the present time.

The time length of the reaction delay of the driver and the time length of the response delay of the system are different from each other. Therefore, it is desirable that the length of the aforementioned predetermined period of time set in determining the timing of performing warning and the length of the aforementioned predetermined period of time set in determining the timing of performing an avoidance operation be different from each other.

Therefore, the travel range prediction part 101 predicts a travel range based on the reaction delay of the driver (which will be hereinafter referred to as the "first travel range") and a travel range based on the response delay of the system (which will be hereinafter referred to as the "second travel range") individually.

The time length of the reaction delay of the driver is determined in advance by a statistical method. The time length of the reaction delay thus obtained may be corrected in accordance with the level of alertness of the driver. For example, the travel range prediction part 101 may determine the level of alertness (whether or not the driver is looking aside or feeling sleepy) using a camera imaging the face of the driver and correct the time length of the reaction delay in such a way as to make the time length longer when the level of alertness is low than when the level of alertness is high. The travel range prediction part 101 may determine whether or not the driver is operating the air conditioner or navigation system using signals output from operation switches of these devices and correct the time length of the reaction delay in such a way as to make the time length longer when the driver is operating the aforementioned devices than when the driver is not operating the aforementioned devices.

The time length of the response delay of the system is determined in advance by, for example, an adaptation process based on experiments. The time length of the response delay thus obtained may be corrected in accordance with the communication load of an in-vehicle network interconnecting the ECU 1 and various devices. For example, the travel range prediction part 101 may correct the time length of the response delay in such a way as to make the time length longer when the communication load of the in-vehicle network is high than when it is low.

As described above, if the travel range is predicted taking into account a free running period necessitated by a reaction delay of the driver or a response delay of the system, a situation in which the timing of performing driving assistance is unduly late can be prevented from occurring and the difference between a path along which a solid object can be actually avoided and a predicted avoidance line can be reduced. In consequence, effective driving assistance can be provided even if there is a reaction delay of the driver or a response delay of the system.

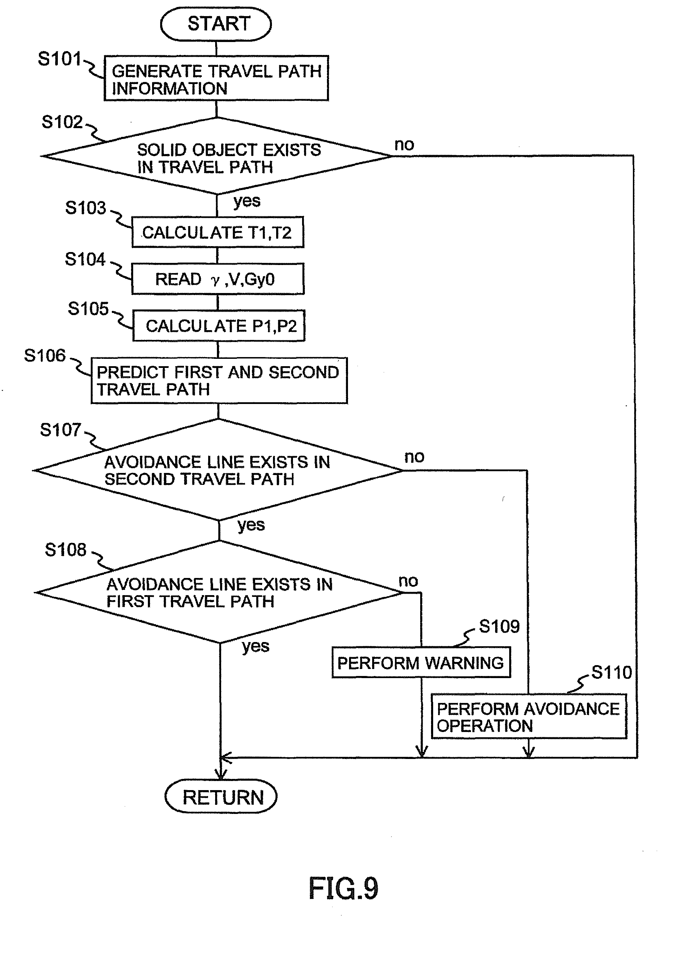

In the following, a process of performing driving assistance in this embodiment will be described with reference to Fig. 9. Fig. 9 is a flow chart of a processing routine, which is stored in, for example, the ROM of the ECU 1 and executed repeatedly by the ECU 1.

In the processing routine shown in Fig. 9, first in step S101, the ECU 1 generates information (travel path information) about a travel path along which the self-vehicle will travel in the future, on the basis of a signal output from the surrounding sensing device 2. Specifically, the ECU 1 generates information about the coordinates of the positions of a solid object that can be an obstacle to the self-vehicle and indexes indicating lane boundaries in a coordinate system having an origin at the position of the self-vehicle, information about the sizes of them, and information about the posture of the self-vehicle relative to the solid object and lane boundaries.

In step S102, the ECU 1 determines, based on the travel path information generated in step S101, whether or not there is a solid object that can be obstacle on the course of the self-vehicle. The "course" mentioned here is a travel path along which the self-vehicle is predicted to travel if the vehicle will continue to run while maintaining the present lateral acceleration Gy0. If the determination in step S102 is negative, the ECU 1 once terminates the execution of this routine. On the other hand, if the determination in step S102 is affirmative, the ECU 1 proceeds to step S103.

In step S103, the ECU 1 calculates the time length T1 of the reaction delay of the driver and the time length T2 of the response delay of the system. Specifically, the ECU 1 reads the time length T1 base of the reaction delay and the time length T2base of the response delay stored in advance in, for example, the ROM and corrects the values thereof using a correction factor F1 according to the level of alertness of the driver and a correction factor F2 according to the communication load of the in-vehicle network (T1 = T1base × F1, T2 = T2base × F2). The correction factor F1 is set to be larger when the level of alertness of the driver is low than when the level of alertness of the driver is high. The correction factor F2 is set to be larger when the communication load of the in-vehicle network is high than when the level of alertness of the driver is low. The relationship between the level of alertness of the driver and the correction factor F1 and the relationship between the communication load of the in-vehicle network and the correction factor F2 may be prepared in advance as maps.

In step S104, the ECU 1 read various data including a signal output from the yaw rate sensor 3 (yaw rate γ), a signal output from the wheel speed sensor 4 (vehicle speed V), and a signal output from the acceleration sensor 5 (lateral acceleration Gy0).

In step S105, the ECU 1 calculates positions (arrival points) P1, P2 at which the self-vehicle will arrive after free running for the time length of reaction delay and for the time length of response delay. Specifically, the ECU 1 calculates the turning radius R (= V/γ) of the self-vehicle at the present time using the yaw rate γ and the vehicle speed V read in step S104 as parameters. The ECU 1 calculates the distance L1 (which will be hereinafter referred to as the "first free running distance) through which the self-vehicle will travel by free running during the reaction delay period using the time length T1 of the reaction delay calculated in the above-described step S103 and the vehicle speed V read in the above-described step S104 as parameters (L1 = T1 × V). The ECU 1 calculates the coordinates of the arrival point P1 in the coordinate system generated in the above-described step S101 using the aforementioned turning radius R and the first free running distance L1 as parameters. Furthermore, the ECU 1 calculates the distance L2 (which will be hereinafter referred to as the "second free running distance) through which the self-vehicle will travel by free running during the reaction delay period using the time length T2 of the response delay calculated in the above-described step S103 and the vehicle speed V read in the above-described step S104 as parameters (L2 = T2 × V). The ECU 1 calculates the coordinates of the arrival point P2 in the coordinate system generated in the above-described step S101 using the aforementioned turning radius R and the second free running distance L2 as parameters.

In step S106, the ECU 1 calculates the coordinates of the first travel range and the second travel range extending from the start points at the coordinates of the arrival points P1 and P2 calculated in the above-described step S105. Specifically, the ECU 1 determines paths b1 and b2 extending from the arrival points P1 and P2 by adding and subtracting the normal change ΔGy to and from the lateral acceleration Gy0 read in the above-described step S104 (i.e. the lateral acceleration of the self-vehicle at the present time). Then, the ECU 1 determines paths b0 associated with regular-step variations in the steering angle or the lateral acceleration in the range (travel range) from the aforementioned path b1 to path b2.

In step S107, the ECU 1 compares the position of the solid object in the coordinate system generated in the above-described step S101 and the second travel range predicted in the above-described step S106 to determine whether or not there is an avoidance line (or avoidance lines) along which the self-vehicle can avoid the solid object in the aforementioned second travel range.

If the determination in the above step S107 is affirmative, the ECU 1 proceeds to step S108 without performing driving assistance by an avoiding operation. In step S108, the ECU 1 compares the coordinates of the position of the solid object generated in the above-described step S101 and the first travel range predicted in the above-described step 106 to determine whether or not there is an avoidance line (or avoidance lines) along which the self-vehicle can avoid the solid object in the aforementioned first travel range.

If the determination in the above step S108 is affirmative, the ECU 1 terminates the execution of this routine without performing driving assistance by warning.

If the determination in step S107 is negative, the ECU 1 proceeds to step S109, where the ECU 1 performs an avoidance operation using the electric power steering (EPS) 12 and/or the electronically controlled brake (ECB) 13. Specifically, the ECU 1 determines a travel path (avoidance line) Le starting from the arrival point P2 along which the self-vehicle can avoid the solid object and calculates a target yaw rate needed to cause the self-vehicle to travel along the avoidance line Le thus determined. Then, the ECU 1 controls the electric power steering (EPS) 12 and/or the electronically controlled brake (ECB) 13 in such a way as to make the actual yaw rate of the self-vehicle equal to the target yaw rate.

During this process, the self-vehicle may move from its position at the present time to the arrival point P2 by free running. However, a collision of the self-vehicle with the solid object can be prevented with improved reliability, because the avoidance line Le is determined as a line starting from the arrival point P2. Moreover, the lateral acceleration of the self-vehicle in traveling along the avoidance line Le can be made low.

If the determination in the above step S108 is negative, the ECU 1 proceeds to step S110, where the ECU 1 performs warning using the buzzer 10 or the display device 11. In this case, there may be a reaction delay until the driver thus warned starts a driving operation for avoiding the solid object, and the self-vehicle may move to the arrival point P1 by free running during the reaction delay period. However, a situation in which the timing of performing the warning is unduly late or a situation in which the avoidance line along which the solid object can be actually avoided is different from the predicted avoidance line can be prevented from occurring, because the first travel range is determined as a range extending from the start point at the arrival point P1.

In the driving assistance system according to the embodiment described in the foregoing, driving assistance is not performed if the situation allows the driver to avoid a collision of the self-vehicle with the solid object by normal driving operations. In consequence, a situation in which driving assistance is performed in spite of the driver's intention of performing normal driving operations can be prevented from occurring.

Furthermore, in the driving assistance system according to the embodiment, since a travel range is predicted taking into consideration a free running period necessitated by a reaction delay of the driver or a response delay of the system, a situation in which the timing of performing driving assistance is unduly late can be prevented from occurring, and the difference between the path along which the solid object can be avoided and the predicted avoidance line can be made small. In consequence, effective driving assistance can be provided even if there is a reaction delay of the driver or a response delay of the system.

While in this embodiment, the lateral acceleration is used as a parameter representing the momentum of the self-vehicle, other parameters such as the yaw rate, lateral G-force, and cornering force may be used. It is preferred that the use be made of a parameter correlating with the yaw rate and the vehicle speed like the lateral acceleration and the lateral G-force.

The lateral acceleration and the lateral G-force increase with increase in the yaw rate and increases in the vehicle speed. Therefore, in the case where the lateral acceleration or the lateral G-force is used as a parameter representing the momentum of the self-vehicle, the travel range predicted by the travel range prediction part 101 is smaller when the vehicle speed is high than when the vehicle speed is low. Consequently, the time at which avoidance lines cease to exist in the travel range (that is, when driving assistance is performed) is earlier when the vehicle speed is high than when the vehicle speed is low. Therefore, even when the running speed of the self-vehicle is high, a collision of the self-vehicle with a solid object can be avoided with improved reliability.

### <Second Embodiment>

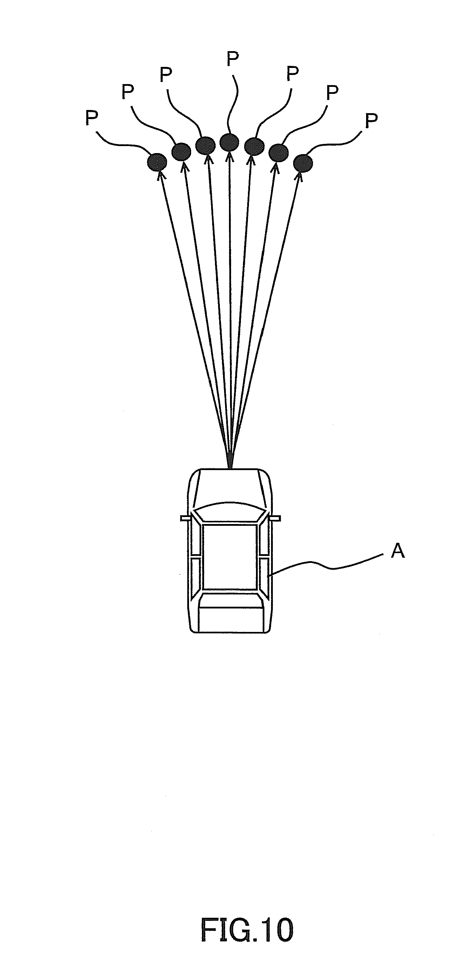

A second embodiment of the present invention will be described with reference to Fig. 10. In the following, features different from those in the above-described first embodiment will be described, and the same features will not be described.

A difference between this embodiment and the above-described first embodiment resides in that an arrival point is determined taking into consideration wobbling of the self-vehicle. In this embodiment, the travel range prediction part 101 determines an arrival point on the assumption that the self-vehicle will wobble to the left or right while the self-vehicle is in free running.

The vehicle may sometimes wobble to the left or right during free running due to play of the steering mechanism, cant of the road surface, slip angle of wheels, or other causes. When such wobbling occurs, the arrival point determined by the method described in the first embodiment may be different from the actual arrival point.

In this embodiment, as shown in Fig. 10, the travel range prediction part 101 may determine a plurality of arrival points P on the assumption that the self-vehicle will wobble to the left or right during free running. In connection with this, the amount of wobbling to the left or right may be obtained in advance by an adaptation process based on, for example, experiments.

In the case where a plurality of arrival points P are determined as described above, the travel range prediction part 101 may predict the first travel range or the second travel range for each of the plurality of arrival points P. Alternatively, the travel range prediction part 101 may predict to which of the left and right sides the self-vehicle will wobble from the yaw rate at the present time and predicts the first travel range or the second travel range only for the arrival points P on the predicted side. The travel range prediction part 101 may predict from the yaw rate at the present time not only the direction of wobbling but also the amount of wobbling and predict the first travel range or the second travel range only for the arrival point P specified by the wobbling direction and the wobbling amount.

In the case where the travel range prediction part 101 predicts the first travel range or the second travel range for each of the plurality of arrival points P, the assistance determination part 102 may enable driving assistance by warning on condition that there is no avoidance line in any of the first travel ranges and enable driving assistance by an avoiding operation on condition that there is no avoidance line in any of the second travel ranges.

As described above, if wobbling during free running is taken into consideration in determining an arrival point(s) and/or in predicting the travel range, a situation in which the timing of performing driving assistance is unduly late can be prevented from occurring with improved reliability, and the difference between the path along which a solid object can be actually avoided and the predicted avoidance line can be further reduced.

### [DESCRIPTION OF THE REFERENCE SIGNS]

- 1:: ECU
- 2:: surrounding sensing device
- 3:: yaw rate sensor
- 4:: wheel speed sensor
- 5:: acceleration sensor
- 6:: brake sensor
- 7:: accelerator sensor
- 8:: steering angle sensor
- 9:: steering torque sensor
- 10:: buzzer
- 11:: display device
- 12:: electric power steering (EPS)
- 13:: electronically controlled brake (ECB)
- 100:: travel path recognition part
- 101:: travel range prediction part
- 102:: assistance determination part
- 103:: warning determination part
- 104:: control determination part
- 105:: control amount calculation part

## Claims

1. A driving assistance system for a vehicle, comprising:
recognition means for recognizing a solid object existing in the surrounding of a self-vehicle;
obtaining means for obtaining the momentum of the self-vehicle at the present time; and
assistance means for obtaining, using the momentum obtained by said obtaining means as a parameter, an arrival point defined as a position at which the self-vehicle will arrive after free running for a predetermined period of time, obtaining a range of paths starting from said arrival point along which the self-vehicle can travel if changes in the momentum caused by possible driving operations that the driver can normally perform are added to the momentum obtained by said obtaining means, and performing driving assistance for avoiding a collision with the solid object recognized by said recognition means on condition that there is no avoidance line defined as a path along which a collision with said solid object can be avoided in said travel range.

2. A driving assistance system for a vehicle according to claim 1, wherein said assistance means determines a plurality of arrival points on the assumption that the self-vehicle shifts to the left or right during free running for the predetermined period of time, obtains a travel range for each of the plurality of arrival points, and performs driving assistance for avoiding a collision with said solid object on condition that there is no avoidance line in any of the travel ranges.

3. A driving assistance system for a vehicle according to claim 1 or 2, wherein the driving assistance performed by said assistance means is a process of warning the driver of the vehicle, and said predetermined period of time is the time taken for the driver of the vehicle to start a driving operation for avoiding a collision with said solid object after the driver is warned.

4. A driving assistance system for a vehicle according to claim 1 or 2, wherein the driving assistance performed by said assistance means is a process of automatically performing a driving operation for avoiding a collision with said solid object, and said predetermined period of time is the time taken for the self-vehicle to move responsive to the driving assistance after said assistance means starts the driving assistance.
